# EUROPÄISCHE PATENTSCHRIFT

(11) **EP 1 053 857 B1**
(45) Veröffentlichungstag und Bekanntmachung des Hinweises auf die Patenterteilung: **19.05.2004**
(21) Anmeldenummer: 00106356.9
(22) Anmeldetag: 24.03.2000
(51) Int. Cl.: B29C 49/42, B29C 49/04, B29L 23/00

(54) **Blasformmaschine für das abfallarme Blasen**
Blow moulding machine for the reduced waste blow moulding
Machine à souffler pour soufflage avec bavures réduites

(30) Priorität: 18.05.1999 DE 19922684
(43) Veröffentlichungstag der Anmeldung: 22.11.2000
(73) Patentinhaber: SIG Kautex GmbH & Co. KG, 53229 Bonn (DE)
(72) Erfinder: Döhmen, Willi, 41065 Mönchengladbach (DE); Schüller, Frank, 50226 Frechen (Königsdorf) (DE); Wehrens, Dirk, 53757 St. Augustin (DE)
(74) Vertreter: Valentin, Ekkehard, Dipl.-Ing.

(56) Entgegenhaltungen:
- EP-A- 0 256 442
- EP-A- 0 301 694
- DE-A- 19 519 094
- US-A- 4 747 768
- US-A- 5 730 927
- PATENT ABSTRACTS OF JAPAN vol. 018, no. 272 (M-1610), 24. Mai 1994 (1994-05-24) & JP 06 047803 A (TOYODA GOSEI CO LTD), 22. Februar 1994 (1994-02-22)

## Beschreibung

Die Erfindung betrifft eine Blasformmaschine zum Herstellen von abfallarmen 3D-Teilen, umfassend mindestens eine horizontal geteilte Blasform aus einer oberen und einer unteren Formhälfte, die im wesentlichen vertikal in eine Offen- und in eine Schließstellung bewegbar sind, wobei die untere Formhälfte auch seitlich horizontal verschiebbar sein kann, mindestens einen einen Vorformlingsschlauch bereitstellenden Extrusions- bzw. Coextrusionskopf, der von mindestens einem Extruder mit dem Kunststoffmaterial gespeist wird, eine Schlauchhandhabungseinrichtung und eine Fertigartikel-Entnahmeeinrichtung.

Das Herstellen von abfallarmen, nahtlosen 3D-Blasformteilen ist eine seit langem bekannte Technik. Hierzu eingesetzte Maschinen weisen in der Regel einen als Wendevorrichtung ausgebildeten Greifer, gegebenenfalls frei programmierbaren sechsachsigen Roboter, zum Einlegen des Vorformlings in ein in dem Blasformwerkzeug eingearbeitetes Formnest bzw. eine Gravur auf. Die nahtlos geblasenen Teile werden hierbei dadurch hergestellt, daß der Vorformling, d.h. der extrudierte Schlauch beim Schließen der Blasform am Umfang nicht abgequetscht wird, sondern vollständig von der Kavität umschlossen ist. Allerdings müssen die beiden Endstücke durch Abquetschen verschlossen werden, um das Aufblasen des Vorformlings durch Nadel- oder Blasdorneinschießen zu ermöglichen. Wie weiterhin durch DE-Z "PLASTVERARBEITER" 44. Jahrgang 1993, Nr. 12, Seiten 44 bis 49 bekanntgeworden, sind als solche hinlänglich bekannte Blasformmaschinen, wie z.B. aus DE 195 19 094 A1 bekannt, dadurch in einen vollautomatischen Herstellungsprozeß eingebunden worden, daß der schlauchartige Vorformling von der Düse des Schlauchkopfes durch einen mechanischen Greifer abgenommen wird, der sich dann nach der Kontur der Kavität verformt. Dieser in der Regel frei programmierbare Sechs-Achsen-Einlegeroboter legt den Vorformling folglich vollautomatisch in die Blasform ein, die wie gemäß der letztgenannten Druckschrift offenbart auf einer vertikalen Schließeinheit aufgespannt ist.

Aus der DE-Z ist es auch bekannt, die Manipulation des Vorformlings durch in der Blasform angeordnete Werkzeugschieber vorzunehmen. Ein solches Einlegeverfahren wird aber hauptsächlich für Blasteile angewendet, die geringe Bauteilkrümmungen aufweisen. Hierbei werden bestimmte, auf der Formtrenn-Ebene liegende Schieber zurückgefahren, wodurch sich verhindern läßt, daß beim Schließen der Blasform diese Bereiche des Vorformlings abgequetscht werden. Nachdem die Schließeinheit das Blasformwerkzeug in üblicher Weise geschlossen hat, werden die Werkzeugschieber wieder vorgefahren und der Vorformling aufgeblasen.

Bei den bekannten Blasformmaschinen hat sich aber gezeigt, daß das Einlegen des Schlauchs bei ungünstigen, sehr engen Radien schwierig oder gar unmöglich ist, weil der Schlauch wieder aus der Kurve herausspringt. Aufgrund des frühzeitigen Kontakts des Schlauchs mit der Formnestkavität der unteren Formhälfte tritt zudem eine nachteilige Abkühlung auf. Schließlich ist das bei den bekannten Blasformmaschinen eingesetzte Schließsystem mit auf Holmen basierenden Schließeinheiten sehr aufwendig, und solche Schließeinheiten eignen sich zudem schlecht für Mehrstationenmaschinen.

Der Erfindung liegt daher die Aufgabe zugrunde, eine Blasformmaschine zum Herstellen von abfallarmen 3D-Teilen der eingangs genannten Art mit verbesserter und variablerer Betriebsweise kostengünstig zu schaffen.

Diese Aufgabe wird erfindungsgemäß dadurch gelöst, daß die obere Formhälfte in der Blasstation in ihrer abgesenkten Betriebslage mit der unteren Formhälfte verriegelbar ist und bei von der unteren Formhälfte abgehobener Lage in eine im wesentlichen senkrechte Position verschwenkbar ist und/oder in horizontaler Ebene linear verfahrbar angeordnet ist. Durch den Einsatz eines bei gattungsgemäßen Blasformmaschinen zum Herstellen von abfallarmen 3D-Teile bisher nicht in Betracht gezogenen, an sich bekannten Verriegelungssysteme zur Aufbringung der Schließ- bzw. Zuhaltekraft bedarf es somit keiner aufwendigen Schließeinheit mehr. Die Erfindung umfaßt damit einerseits die Betriebsweise Verriegeln und ― nach dem Entriegeln ― lineares Verfahren oder Ver- und Entriegeln sowie Verschwenken der oberen Formhälfte und andererseits das Verriegeln und ― nach dem Entriegeln ― sowohl das lineare Verfahren als auch das Verschwenken der oberen Formhälfte.

Aufgrund des erfindungsgemäßen Verschwenkens der abgehobenen oberen Formhälfte um 90 ° in die im wesentlichen Senkrechte ist nunmehr diese Formhälfte für einen Einlegeroboter ohne größeren Aufwand erreichbar, was das Zuführen von Einlegeteilen wesentlich erleichtert. Außerdem läßt sich ein großer Zeitvorteil erreichen, da die obere Formhälfte in der gleichen Position steht, wie der den Vorformlingsschlauch einlegende Roboter, der nach dem Verschwenken der Formhälfte einen ausreichenden Freiraum für seine Handhabungsmanipulationen hat. Die obere Formhälfte braucht danach lediglich noch in ihre Betriebslage zurückgeschwenkt und auf die untere Formhäfte abgesenkt zu werden. Demgegenüber verwirklichen bekannte Konzepte eine mehr oder weniger zeitaufwendig manipulierbare untere Formhälfte zur Einlegung des von einem festen Punkt ausgehenden extrudierten Schlauchs.

Wenn die obere Formhälfte zusätzlich linear verfahrbar ist, läßt sich in einfacher Weise ein Mehrstationensystem bzw. ein Betrieb auf sogenannten Radmaschinen verwirklichen, d. h. mehr als zwei Werkzeuge können auf die gleiche Extrusionseinheit zurückgreifen, was insbesondere für die sequentielle Extrusion oder die Coextrusion überhaupt vorteilhaft ist. Die sich in diesem Fall auf zwei Linearachsen bewegende obere Formhälfte ermöglicht eine Betriebsweise, bei der sich die angehobene obere Formhälfte nach wie vor zur Entformung des Fertigartikels benutzen und nach bzw. vor dem Verfahren in eine weitere Station - der sich Folgestationen anschließen können - um 90° in die Vertikale schwenken läßt, um einem Roboter oder Zuführsystem oder Bedienungspersonal das Einlegen von sogenannten Einlegeteilen, z.B. Laschen etc., in einfacher Weise zu ermöglichen.

Es wird vorgeschlagen, daß ein die obere Formhälfte aufnehmender Verfahrschlitten mit einer Hub-Vorrichtung versehen ist. Diese wird in der Blasstation ausschließlich zum Absenken bzw. Anheben der oberen Formhälfte auf die bzw. von der unteren Formhälfte genutzt. In der Blasstation sind dabei auch solche Formtrennlinien möglich, die von der im wesentlichen horizontalen Teilungsebene abweichen können, da die obere Formhälfte beim Schließvorgang auch mit anderer Bewegungsrichtung geführt werden könnte.

Um das Verschwenken in die im wesentlichen Senkrechte zu ermöglichen, ist der oberen Formhälfte erfindungsgemäß eine Schwenkeinrichtung zugeordnet, z.B. ein bekannter motorbetriebener Drehantrieb.

Es empfiehlt sich, daß auf der unteren Formhälfte verschiebbare Verriegelungszylinder und auf der oberen Formhälfte starre Gegenriegel angeordnet sind, und zwar jeweils auf den die Formhälften tragenden Formaufspannplatten. Insbesondere dann, wenn der unteren Formhälfte mehr als eine horizontal verfahrbare obere Formhälfte zugeordnet ist, bedarf es nur einmal einer Bestückung mit den gegenüber den Gegenriegeln hochwertigeren und damit teueren Verriegelungszylindem.

Wenn vorzugsweise über der Formnestkavität der unteren Formhälfte zumindest im Bereich von dort engen Radien einander paarweise gegenüberliegend Schieber angeordnet sind, die beim Einlegen eines Vorformlingsschlauches die Artikel-Kavität - gegebenenfalls sukzessive - schließen, läßt sich der Schlauch auch bei sehr engen Radien einlegen, ohne aus der Kavität herauszuspringen. Die obere Formhälfte, die sozusagen einen Topfdeckel für die untere Formhälfte darstellt, besitzt in diesem Fall eine das zumindest eine Schieberpaar formschlüssig einrastend aufnehmende Aussparung. Die für die Schieber notwendigen Antriebe sowie auch die Steuerung sind nicht Bestandteil des Werkzeuges bzw. der Blasform, sondern können in dem die untere Formhälfte aufweisenden Maschinenbett vorgesehen werden. Da nicht die Schieber und deren Antriebe, sondern das Verriegelungssystem die Schließkräfte aufbringt, sind die Schieber mit den Antrieben sehr kostengünstig auszulegen.

Ein Vorschlag der Erfindung sieht vor, daß in die Formnestkavität der unteren Formhälfte temperierte Luft eingeblasen wird. Es läßt sich damit ein unzulässiges Abkühlen des Schlauches vermeiden, so daß beim Aufblasprozeß keine dickere Wandung auftritt.

Weitere Merkmale und Vorteile der Erfindung ergeben sich aus den Ansprüchen und der nachfolgenden Beschreibung, in der in den Zeichnungen sehr schematisch dargestellte Ausführungsbeispiele des Gegenstandes der Erfindung näher erläutert sind. Es zeigen:
- Fig. 1: von einer Blasformmaschine als Einzelheit deren in der aufgefahrenen Betriebsposition dargestellten Formhälften;
- Fig. 2: eine der Darstellung gemäß Fig. 1 entsprechende Anordnung mit demgegenüber in eine weitere Station verfahrener und in die Senkrechte geschwenkter oberer Formhälfte;
- Fig. 3: in der Draufsicht eine schematische Darstellung einer anderen Ausführung einer unteren Formhälfte, der im Bereich kritischer Radien der Artikel-Kavität Schieber zugeordnet sind; und
- Fig. 4: einen Schnitt entlang der Linie IV-IV von Fig. 3.

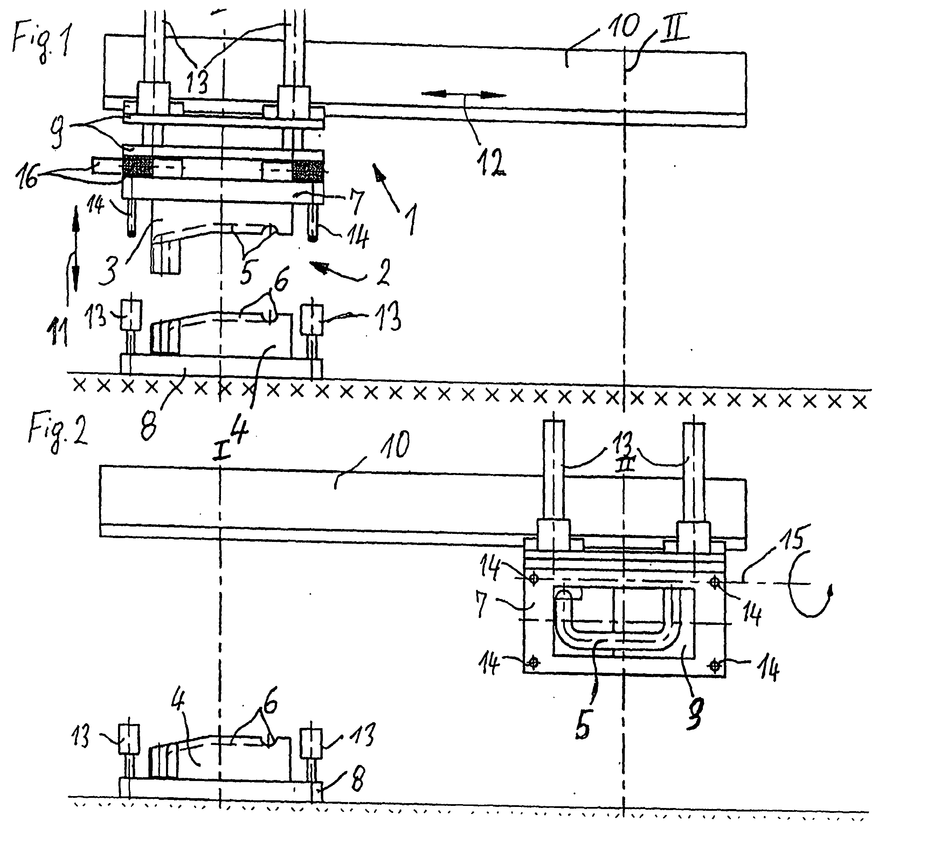

Von einer als solche hinlänglich bekannten Blasformmaschine ist in Fig. 1 der Einfachheit halber unter Vernachlässigung eines mindestens einen Vorformlingsschlauch bereitstellenden Extrusions- bzw. Coextrusionskopfes, des diesem zugeordneten Extruders sowie der Schlauchhandhabungs-Einrichtung und Fertigartikel-Entnahmeeinrichtung im wesentlichen lediglich das Werkzeug 2 gezeigt, das aus einer oberen Formhälfte 3 und einer unteren Formhälfte 4 besteht. Die untere Formhälfte 4 kann wie gemäß Fig. 1 fest, alternativ beweglich angeordnet sein. Beide Formhälften 3, 4 besitzen Formnestkavitäten 5, 6, die in der abweichend von der gezeigten Offenstellung geschlossenen Schließstellung zum Blasen eines Fertigartikels einen zuvor von einem Handhabungsgerät bzw. Einlegeroboter von einem Extrusions- bzw. Coextrusionskopf abgenommenen und in die Formnestkavität 6 der unteren Formhälfte 4 eingelegten Vorformlingsschlauch einschließen. Sowohl die obere als auch die untere Formhälfte 3, 4 werden von Formaufspannplatten 7, 8 getragen.

Die obere Formhälfte 3 ist in einem Schlitten 9 angeordnet, der auf einem Tragrahmen 10 aus der Blasstation I in eine Handhabungsstation II mittels eines an den Schlitten 9 angreifenden Verfahrantriebes linear verfahrbar ist. Die obere Formhälfte 3 ist damit auf einer vertikalen Linearachse 11 und einer horizontalen Linearachse 12 beweglich. Der Schlitten 9 ist mit einer aus zwei Zylindern bestehenden Hub-Vorrichtung 13 versehen. Im einfachsten Fall wird die obere Formhälfte 3 mittels der Vorrichtung 13 lediglich auf der vertikalen Linearachse 11 aufund abbewegt, wobei in der geschlossenen Lage das Blasformen stattfindet und in der gezeigten Offenstellung ohne weiteres der Fertigartikel entformt und entnommen werden kann sowie bei in die Senkrechte verschwenkter oberer Formhälfte 3 ein Handhabungsroboter (nicht dargestellt) ausreichende Freiheitsgrade zum Einlegen eines neuen Vorformlingsschlauchs in die untere Formhälfte 4 hat. Zum Verschwenken in die Senkrechte und zurück ist der oberen Formhälfte 3 eine Schwenkeinrichtung 16 zugeordnet.

Zum Aufbringen der Schließ- bzw. Zuhaltekraft in der Schließstellung der Formhälften 3, 4 wird ein Verriegelungssystem verwendet, so daß eine Schließeinheit auf Basis einer Holmlösung entfallen kann. Zur Verriegelung sind auf der unteren Formaufspannplatte 8 Verriegelungszylinder 13 und diesen gegenüberliegend auf der oberen Formaufspannplatte 7 starre Gegenriegel 14 angeordnet, die beim Zufahren des Werkzeugs 2 in die Schließstellung kuppelnd in die Verriegelungszylinder 13 einrasten, wobei danach die Verriegelungszylinder 13 die erforderliche Schließkraft aufbringen. Die in der angehobenen Position mittels der Schwenkeinrichtung 16 in die Senkrechte verschwenkbare obere Formhälfte 3 ist dann für das Zuführen von Einlegeteilen von Hand oder automatisch mittels eines Einlegeroboters frei zugänglich.

Bei der Variante nach Fig. 2 wird die obere Formhälfte 3 aus der Blasstation I in - wie gezeigt - die Station II verfahren und dort, d.h. entfernt von der Blasstation I in die dargestellte senkrechte Position um die Schwenkachse 15 verschwenkt. Die Formnestkavität 5 liegt damit frei zugänglich für einen Roboter, ein Zuführsystem oder zur manuellen Handhabung durch ein Bedienungspersonal, um ungehindert Einlegeteile, z. B. Laschen, in die Formnestkavität 5 einzubringen. Sobald das geschehen ist, wird die Formhälfte 3 in die Blasstation I zurückgefahren, in die horizontale Position gemäß Fig. 1 geschwenkt und zum Blasen des Fertigartikels auf die untere Formhälfte 6 abgesenkt und mit dieser unter Aufbringung der Schließkraft mittels der Zylinder 13 verriegelt. Dieses Wechselspiel läßt sich für beliebige Maschinenkonzepte verwirklichen, insbesondere auch dann, wenn der unteren Formhälfte 3 mehr als eine horizontal verfahrbare obere Formhälfte zugeordnet wird, wobei die untere Formhälfte 4 dann von der jeweiligen in die Betriebsposition gefahrenen oberen Formhälfte abgedeckelt wird.

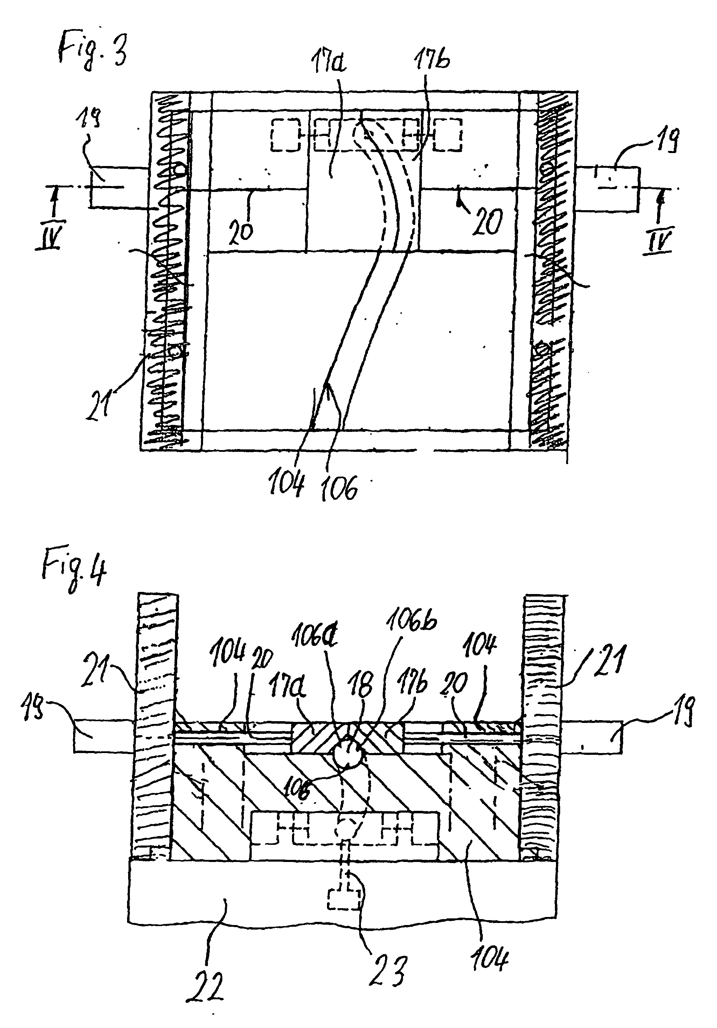

Die Figuren 3 und 4 zeigen eine andere Ausführung einer unteren Formhälfte 104 mit der darin ausgebildeten Formnestkavität 106. Diese wird hier durch zwei einander im Bereich eines engen Radius der Formnestkavität 106 einander gegenüberliegend angeordnete Schieber 17a, 17b zur fertigen Artikelkavität 18 (vgl. Fig. 4) komplettiert, während der schieberfreie Bereich von der Formnestkavität 5 der oberen Formhälfte 3 ergänzt wird, die anders als in den Figuren 1, 2 dargestellt mit einer die Schieber 17a, 17b formschlüssig übergreifenden und einkammemden Aussparung ausgebildet ist. Zur Komplettierung der Artikelkavität 18 besitzen die Schieber 17a, 17b jeweils einen Viertelkreis der Artikelkavität 18 entsprechende Teilkonturen 106a, 106b. Zum Positionieren der Schieber 17a, 17b als Antrieb eingesetzte Hydraulikzylinder 19 sind über ihre Kolbenstangen 20 mit den Schiebern 17a, 17b verbunden und in X-Y-Richtung in Langlöchern von Traversen 21 des Maschinengestells 22 verstellbar angeordnet. Die Position der Zylinder 19 ist damit formabhängig einstellbar.

Beim Einlegen eines Vorformlingsschlauches in die untere Formnest-Kavität 106 werden mit dem Einlegevorgang des Roboters abgestimmt die Schieber 17a, 17b in ihre in den Figuren 3, 4 gezeigte geschlossene Position vorgefahren und verhindern somit, daß der Vorformlingsschlauch in dem engen Radius der Formnestkavität 106 aus dieser herausspringen kann. Sobald die Schieber, deren genaue Zahl im Einzelfall von den vorhandenen engen Radien bestimmt wird, geschlossen bzw. zugefahren sind, die obere Formhälfte abgesenkt wurde und das Verriegelungssystem 13, 14 die Schließkraft aufbringt, wird durch Einschießen eines in der unteren Formhälfte 4 bzw. 104 integrierten Blasdomes bzw. einer Blasnadel 23 das Aufblasen des in dem Formnest über seinen gesamten Umfang eingeschlossenen Vorformlingsschlauches zu einem Fertigartikel eingeleitet.

## Patentansprüche

1. Blasformmaschine zum Herstellen von abfallarmen 3D-Teilen, umfassend mindestens eine horizontal geteilte Blasform (2) aus einer oberen und einer unteren Formhälfte (3, 4), die im wesentlichen vertikal in eine Offen- und in eine Schließstellung bewegbar sind, wobei die untere Formhälfte (4) auch seitlich horizontal verschiebbar sein kann, mindestens einen Vorformlingsschlauch bereitstellenden Extrusions- bzw. Coextrusionskopf, der von mindestens einem Extruder mit dem Kunststoffmaterial gespeist wird, eine Schlauchhandhabungseinrichtung und eine Fertigartikel-Entnahmeeinrichtung,
**dadurch gekennzeichnet,**
**daß** die obere Formhälfte (3) in einer Blasstation (I) in ihrer abgesenkten Betriebslage mit der unteren Formhälfte (4) verriegelbar ist und bei von der unteren Formhälfte (4) abgehobener Lage in eine im wesentlichen senkrechte Position verschwenkbar ist und/oder in horizontaler Ebene linear verfahrbar angeordnet ist.

2. Blasformmaschine nach Anspruch 1,
**dadurch gekennzeichnet**
**daß** ein die obere Formhälfte (3) aufnehmender Verfahrschlitten (9) mit einer Hub-Vorrichtung (13) versehen ist.

3. Blasformmaschine nach Anspruch 1 oder 2,.
**dadurch gekennzeichnet,**
**daß** der oberen Formhälfte (3) eine Schwenkeinrichtung (16) zugeordnet ist.

4. Blasformmaschine nach einem der Ansprüche 1 bis 3,
**dadurch gekennzeichnet,**
**daß** auf der unteren Formhälfte (4) verschiebbare Verriegelungszylinder (13) und auf der oberen Formhälfte (3) starre Gegenriegel (14) angeordnet sind.

5. Blasformmaschine nach einem der Ansprüche 1 bis 4,
**gekennzeichnet durch**
über der Formnestkavität (6) der unteren Formhälfte (4) zumindest im Bereich enger Radien einander paarweise gegenüberliegend angeordnete Schieber (17a, 17b), die beim Einlegen eines Vorformlingsschlauches die Artikelkavität (18) schließen.

6. Blasformmaschine nach einem der Ansprüche 1 bis 5,
**gekennzeichnet durch**
in die Formnestkavität (6) der unteren Formhälfte (4) eingeblasene temperierte Luft.

7. Blasformmaschine nach einem der Ansprüche 1 bis 6,
**dadurch gekennzeichnet,**
**daß** der unteren Formhälfte (4) mehr als eine horizontal verfahrbare obere Formhälfte (3) zugeordnet ist.

## Claims

1. A blow moulding machine for the production of 3D parts with little waste, comprising at least one horizontally split blowing mould (2) consisting of an upper and a lower mould half (3, 4), which can be moved essentially vertically into an open and into a closed position, whereby the lower mould half (4) can also be displaced horizontally sidewards, at least one extrusion or coextrusion head producing preform tube, said head being fed by at least one extruder with the plastic material, a tube handling device and a finished-article removal device,
**characterised in that**
the upper mould half (3) in a blowing station (1) can be locked in its lowered operating position with the lower mould half (4) and, in a position raised from the lower mould half (4), can be swivelled into an essentially vertical position and/or is arranged linearly conveyable in the horizontal plane.

2. The blow moulding machine according to claim 1,
**characterised in that**
a traversing carriage (9) accommodating the upper mould half (3) is provided with a lifting device (13).

3. The blow moulding machine according to claim 1 or 2,
**characterised in that**
a swivelling device (16) is assigned to the upper mould half (3).

4. The blow moulding machine according to any one of claims 1 to 3,
**characterised in that**
displaceable locking cylinders (13) are arranged on the lower mould half (4) and rigid counter-bolts (14) are arranged on the upper mould half (3).

5. The blow moulding machine according to any one of claims 1 to 4,
**characterised by**
slide gates (17a, 17b) arranged in a pair lying opposite one another at least in the region of tight radii above for the mould cavity (6) of the lower mould half (4), said slide gates closing the article cavity (18) when a preform tube is introduced.

6. The blow moulding machine according to any one of claims 1 to 5,
**characterised by**
tempered air blown into the mould cavity (6) of the lower mould half (4).

7. The blow moulding machine according to any one of claims 1 to 6,
**characterised in that**
more than one horizontally conveyable upper mould half (3) is assigned to the lower mould half (4).

## Revendications

1. Machine de formage par soufflage pour la fabrication de pièces 3D produisant peu de déchets, comportant au moins un moule de formage (2) partagé horizontalement constitué de deux moitiés de moule, une supérieure et une inférieure (3, 4) mobiles sensiblement verticalement dans une position d'ouverture et de fermeture, la moitié de moule inférieure (4) pouvant aussi être déplaçable latéralement et horizontalement par translation, machine comportant au moins une tête d'extrusion ou de co-extrusion procurant un tuyau flexible ébauché et alimentée en matière plastique par au moins une extrudeuse, un dispositif de manipulation de tuyau et un dispositif de prélèvement d'article fini,
**caractérisé en ce que**
la moitié supérieure (3) du moule est verrouillable avec la moitié inférieure (4) du moule dans un poste de soufflage (1) dans sa position de service abaissée et est pivotante dans une position sensiblement verticale et/ou est translatable dans un plan horizontal lorsqu'elle se trouve dans une position de relèvement partant de la moitié de moule inférieure (4).

2. Machine de formage par soufflage selon la revendication 1,
**caractérisée en ce**
**qu'**un chariot mobile (9) réceptionnant la moitié supérieure (3) du moule est équipé d'un dispositif de soulèvement (13).

3. Machine de formage par soufflage selon la revendication 1 ou 2,
**caractérisée en ce**
**qu'**un dispositif de pivotement (16) est associé à la moitié supérieure (3) du moule.

4. Machine de formage par soufflage selon l'une des revendications 1 à 3,
**caractérisée en ce que**
des vérins de verrouillage (13) mobiles sont agencés sur la moitié inférieure (4) du moule, et des contre-verrous (14) rigides, sur la moitié supérieure (3) du moule.

5. Machine de formage par soufflage selon l'une des revendications 1 à 4,
**caractérisée par**
des tiroirs (17a, 17b) agencés par paires se faisant face du moins dans la zone de rayons étroits au-dessus de la cavité de formage (6) de la moitié inférieure (4) du moule, qui ferment la cavité (18) destinée à l'article lors de l'introduction d'un tuyau ébauché.

6. Machine de formage par soufflage selon l'une des revendications 1 à 5,
**caractérisée par**
de l'air tempéré insufflé dans la cavité de formage (6) de la moitié inférieure (4) du moule.

7. Machine de formage par soufflage selon l'une des revendications 1 à 6,
**caractérisée en ce que**
plus d'une moitié de moule supérieure (3) mobile horizontalement est associée à la moitié inférieure (4) du moule.
